Europäisches Patentamt

European Patent Office

Office européen des brevets

(19)

(11) Numéro de publication : **0 390 648 B1**

(12) **FASCICULE DE BREVET EUROPEEN**

(45) Date de publication du fascicule du brevet :
**09.12.92 Bulletin 92/50**

(51) Int. Cl.⁵ : **G01B 11/00,** G01B 5/00,
G01B 7/00, G01D 5/26

(21) Numéro de dépôt : **90400774.7**

(22) Date de dépôt : **21.03.90**

(54) Capteur de contact multidirectionnel pour machines de contrôle.

(30) Priorité : **23.03.89 FR 8903836**

(43) Date de publication de la demande :
**03.10.90 Bulletin 90/40**

(45) Mention de la délivrance du brevet :
**09.12.92 Bulletin 92/50**

(84) Etats contractants désignés :
**CH DE FR GB LI**

(56) Documents cités :
**WO-A-90/00717
DE-A- 3 246 252
FR-A- 2 365 408
FR-A- 2 384 230
US-A- 4 521 683
PATENT ABSTRACTS OF JAPAN, vol.8, no.
105 (P-274)(1542) 17 May 1984; & JP-
A-59015804**

(73) Titulaire : **COMMISSARIAT A L'ENERGIE
ATOMIQUE Etablissement de Caractère
Scientifique Technique et Industriel
31/33, rue de la Fédération
F-75015 Paris (FR)**
Titulaire : **CABINET D'ETUDES TECHNIQUES
J.P. GAUTHIER
6, Allée des Pétunias
F-77200 Pomponne (FR)**

(72) Inventeur : **Chopineaux, René
Avenue Joliot Curie, Le Ripault
F-37260 Monts (FR)**
Inventeur : **Gauthier, Jean-Pierre
6, Allée des Pétunias
F-77400 Pomponne (FR)**

(74) Mandataire : **Mongrédien, André et al
c/o BREVATOME 25, rue de Ponthieu
F-75008 Paris (FR)**

EP 0 390 648 B1

# Description

La présente invention a pour objet un capteur de contact multidirectionnel pour machines de contrôle. Elle s'applique notamment au contrôle et à la mesure des cotes de pièces de formes diverses.

Pour effectuer une mesure sur une machine de contrôle, on déplace suivant les trois axes de l'espace un bâti mobile sur lequel est fixé un capteur de contact.

De manière usuelle, ce capteur de contact comprend un palpeur mobile qui permet par exemple d'enregistrer les différences de cotes entre différents points d'une pièce à mesurer.

Certains capteurs ne peuvent mesurer que des différences de cotes selon un axe perpendiculaire à un plan de référence : ce sont des capteurs monodirectionnels. Les capteurs multidirectionnels, par exemple grâce à des basculements, peuvent mesurer des différences de cotes selon plusieurs axes.

Habituellement, c'est lorsque le palpeur rencontre la pièce que la mesure est effectuée. Un système de détection des déplacements du palpeur par rapport au corps du capteur fournit alors un signal électrique qui commande l'arrêt du mouvement de la tête de mesure et l'enregistrement de la position dans l'espace du capteur.

Une liaison élastique ramène automatiquement le palpeur à sa position de repos, dès que le contact est interrompu. Pour que les mesures ne soient pas faussées, il est important que le palpeur revienne rigoureusement dans la même position.

De manière connue, le signal électrique de commande fourni par le système de détection des mouvements du palpeur est obtenu par fermeture d'un interrupteur ou par pression sur un transducteur. Dans les deux cas, le signal est déclenché par le basculement du palpeur par l'intermédiaire des éléments de liaison. Ce basculement doit avoir une certaine amplitude pour être actif.

Les capteurs connus présentent divers inconvénients. La mécanique assurant la liaison élastique possède une structure complexe qui ne confère pas une totale isotropie du capteur.

Le déclenchement du signal électrique de commande par basculement et action mécanique du palpeur impose que la pression exercée sur l'extrémité du palpeur soit importante. Cette pression a pour effet, lorsque les pièces à contrôler sont de faible épaisseur, d'entraîner des déformations au point de contact. Ces déformations sont inacceptables puisqu'elles détériorent la pièce à contrôler ; elles faussent d'autre part la mesure.

L'amplitude importante du déplacement du palpeur par rapport à la pièce à contrôler constitue une autre source d'erreurs sur la détermination des cotes.

Le cumul de ces imprécisions nuit à la qualité des mesures effectuées.

On connaît également d'après le document FR 2 365 408 un dispositif palpeur à deux axes pour la commande de moyens de copiage d'un gabarit pour machines-outils. Dans ce dispositif, le capteur est monté sur un ressort plan en forme de disque constituant des moyens élastiques de support et la détection des mouvements du capteur est assurée par un détecteur optique.

En conséquence, la force d'appui de la pointe de palpage sur le gabarit est faible. En outre , ce dispositif ne permet pas d'effectuer une détection tridimensionnelle.

La présente invention pallie ces divers inconvénients. Pour cela, la liaison élastique est constituée d'une membrane souple qui permet, simplement, d'obtenir une totale isotropie dans la détection.

Le système de détection des mouvements du palpeur préconisé par l'invention ne requiert pas de contact mécanique entre le palpeur et un interrupteur : la détection est optique. Cela permet d'augmenter considérablement la sensibilité du capteur et d'abaisser de manière conséquente la pression nécessaire pour obtenir le déclenchement du signal de commande, pression exercée par le palpeur sur la pièce à contrôler.

Du même coup, l'amplitude du basculement nécessaire au déclenchement du signal est fortement abaissée.

De manière plus précise, la présente invention concerne un capteur de contact multidirectionnel comprenant un palpeur mobile maintenu par un moyen élastique à une extrémité d'un corps apte à être monté sur une machine de contrôle et un système de détection des mouvements du palpeur.

Le moyen élastique est constitué d'une membrane souple assujettie au corps, le palpeur étant rendu solidaire de la membrane souple par des moyens de fixation.

Une face de la membrane souple présente un relief circulaire centré sur le centre de la membrane et formant une concavité sur l'autre face de la membrane. Ainsi, on rend plus isotrope la réponse du capteur aux contraintes axiales et radiales.

D'autre part, la membrane repose sur un plan de repos permettant d'annuler les effets d'éventuelles vibrations intervenant lors du déplacement du capteur. De plus, au repos, la membrane ne se déforme pas sous l'effet du poids qu'elle supporte (palpeur, ...).

Dans un mode préféré de réalisation, la membrane souple est assujettie au corps au moyen d'une bague de serrage fixée à l'extrémité dudit corps.

Selon une caractéristique particulière du capteur objet de l'invention, la bague de serrage entoure le palpeur de manière à constituer une butée limitant l'amplitude des mouvements dudit palpeur.

La bague de serrage comprend encore une butée servant de plan de repos à la membrane souple.

De manière préférée, la membrane souple est réalisée dans un alliage de fer et de nickel. Cet alliage confère à la membrane des caractéristiques d'élasticité particulièrement favorables alliées à une robustesse qui garantit la longévité du capteur et sa fiabilité. Cet alliage ne s'oxyde pas. De plus, il est stable mécaniquement et chimiquement dans le temps.

La membrane souple a une épaisseur comprise entre 0,03 mm et 0,09 mm. Préférentiellement, cette épaisseur est de 0,05 mm.

Selon un mode de réalisation particulier, la membrane souple présente un orifice en son centre. Les moyens de fixation du palpeur à la membrane consistent en une tige filetée solidaire du palpeur et disposée selon l'axe longitudinal dudit palpeur, la tige filetée passant à travers l'orifice. La membrane souple est pincée entre une pièce vissée sur la tige filetée et le palpeur ; la pièce vissée constitue un support pour un miroir concave.

Le palpeur est ainsi solidaire de la membrane qui le ramène en position de repos dès que le contact avec la pièce à contrôler est rompu. Le moyen élastique est donc réalisé de manière efficace, isotrope et particulièrement simple.

Selon une variante préférée de réalisation, le système de détection des déplacements du palpeur comprend :
- un miroir concave solidaire du palpeur,
- une première fibre optique et une seconde fibre optique, ayant toutes deux une extrémité placée au centre de courbure du miroir concave lorsque le palpeur est dans sa position de repos,
- un circuit optoélectronique relié à une extrémité de chaque fibre optique, ce circuit délivrant un premier signal lumineux introduit dans la première fibre optique, captant un second signal lumineux délivré par la seconde fibre optique, analysant ce second signal lumineux et délivrant au moins un signal électrique de commande lorsque des variations d'intensité du second signal lumineux sont détectées.

Cette détection optique permet une grande sensibilité du capteur : l'amplitude des mouvements du palpeur n'a pas besoin d'être importante pour déclencher l'arrêt des mouvements de la machine de contrôle. Cela permet d'améliorer la fiabilité du capteur puisque la membrane souple n'est soumise qu'à des torsions d'amplitude négligeable.

Selon un mode particulier de réalisation, le circuit opto-électronique comporte :
- un circuit de modulation délivrant sur une sortie un signal sinusoïdal de modulation,
- une source d'alimentation reliée par une entrée à la sortie du circuit de modulation,
- une diode électroluminescente connectée à la source d'alimentation,
- un circuit de mise en forme relié par une entrée à la sortie du circuit de modulation et délivrant sur une sortie un signal carré de même période et en phase avec le signal de modulation,
- une première bascule reliée par une entrée à la sortie du circuit de mise en forme et délivrant sur une première sortie un signal impulsionnel synchronisé sur chaque maximum du signal de modulation, et sur une seconde sortie un signal inverse du signal délivré sur la première sortie,
- une seconde bascule reliée par une entrée à la sortie du circuit de mise en forme et délivrant sur une première sortie un signal impulsionnel synchronisé sur chaque minimum du signal de modulation, et sur une seconde sortie un signal inverse du signal délivré sur la première sortie,
- un circuit logique "NON ET" relié par une première entrée à la seconde sortie de la première bascule, par une seconde entrée à la seconde sortie de la seconde bascule et délivrant sur une sortie un signal impulsionnel de validation,
- une diode photosensible émettant un signal électrique sur une de ses bornes,
- un amplificateur connecté à la diode photosensible et délivrant sur une sortie un signal électrique amplifié,
- un premier circuit échantillonneur-bloqueur relié par une entrée à la sortie de l'amplificateur et relié par une autre entrée à la sortie de la première bascule, l'échantillonnage étant déclenché par le signal impulsionnel délivré par la première bascule et délivrant sur une sortie un signal d'échantillonnage,
- un second circuit échantillonneur-bloqueur relié par une entrée à la sortie de l'amplificateur et relié par une autre entrée à la sortie de la seconde bascule, l'échantillonnage étant déclenché par le signal impulsionnel délivré par la seconde bascule, et délivrant sur une sortie un signal d'échantillonnage,
- un amplificateur différentiel relié par une première entrée à la sortie du premier échantillonneur-bloqueur, relié par une seconde entrée à la sortie du second échantillonneur-bloqueur et délivrant sur une sortie un signal proportionnel à la différence entre les signaux d'échantillonnage délivrés par les échantillonneur-bloqueurs,
- un circuit comparateur relié par une entrée à la sortie de l'amplificateur différentiel et par une autre entrée à la sortie du circuit logique "NON ET", et délivrant un signal de commande lorsque le signal proportionnel à la différence entre les signaux d'échantillonnage est supérieur à une valeur de seuil déterminée.

On opère donc une détection synchrone, puisque la comparaison s'effectue uniquement sur les signaux échantillonnés. Cette manière de faire permet de s'affranchir des dérives en température comme de celles dues au vieillissement des composants électroniques. La détection est ainsi très sûre et très précise.

Le palpeur comprend un doigt et une partie terminale ; selon un mode de réalisation particulier, le doigt est en matériau à fibres de carbone longues moulé en forme de cône creux. Le fait que le doigt soit creux permet un gain de poids appréciable. Le matériau à fibres de carbone longues assure la rigidité et la tenue mécanique du doigt.

D'autres caractéristiques et avantages de l'invention apparaîtront mieux après la description qui suit donnée à titre explicatif et nullement limitatif. Cette description se réfère à des dessins annexés sur lesquels :

- la figure 1 représente schématiquement un capteur de contact selon l'invention monté sur une machine de contrôle,

- la figure 2 représente schématiquement une vue en coupe d'un capteur de contact selon l'invention,

- la figure 3 représente schématiquement une vue en coupe d'un mode particulier de réalisation d'un palpeur,

- la figure 4 représente schématiquement la partie destinée à l'émission de lumière d'un circuit optoélectronique conforme à l'invention,

- la figure 5 représente schématiquement les diagrammes temporels des différents signaux délivrés par la partie émission du circuit optoélectronique,

- la figure 6 représente schématiquement la partie destinée à la réception de lumière d'un circuit optoélectronique conforme à l'invention,

- la figure 7 représente schématiquement une variante de réalisation d'un système de détection des déplacements du palpeur,

- les figures 8A et 8B représentent schématiquement l'allure des variations de la puissance lumineuse recueillie par une fibre optique après réflexion sur le miroir concave en fonction de l'amplitude d'un déplacement axial et radial (respectivement) du palpeur.

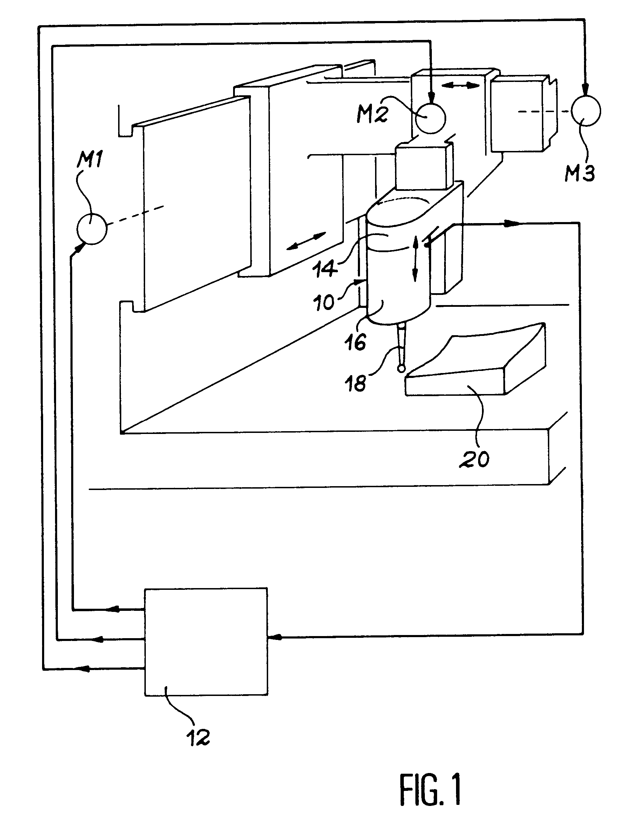

La figure 1 représente schématiquement un capteur de contact 10 selon l'invention monté sur une machine de contrôle. Un système de commande 12 actionne trois moteurs M1, M2, M3 qui déplacent le capteur 10 dans les trois directions de l'espace.

Le capteur 10 est relié à la machine par une attache 14. Il est constitué d'un corps 16 comportant un palpeur mobile 18 à l'une de ses extrémités. Le corps 16 est par exemple cylindrique et en acier inoxydable traité pour avoir une tenue mécanique stable. Il assure une liaison rigide avec l'attache 14 qui ferme sa partie supérieure. Le corps 16 contient un système de détection des mouvements du palpeur 18 qui commande l'arrêt des moteurs M1, M2, M3, lorsque le palpeur 18, entre en contact avec la pièce à contrôler 20. Le système de commande 12 analyse alors les coordonnées du palpeur 18, ce qui permet la mesure ou le contrôle des cotes de la pièce 20.

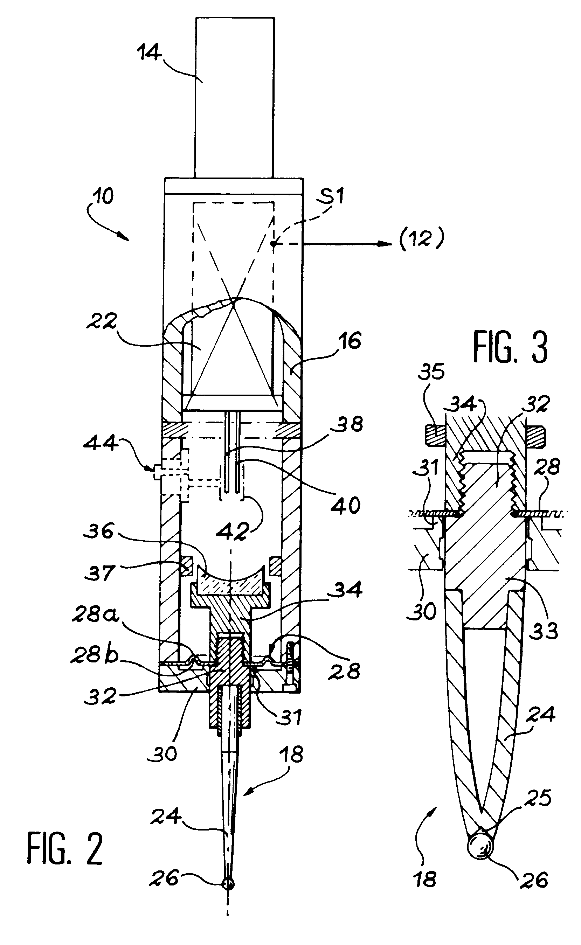

La figure 2 représente schématiquement une vue en coupe d'un capteur 10 selon l'invention. Le capteur 10 est constitué d'un palpeur mobile 18 maintenu par un moyen élastique à une extrémité d'un corps 16. Le capteur 10 est relié à la machine de contrôle (non représentée figure 2) par une attache 14.

Le palpeur mobile 18 est constitué d'un doigt 24, par exemple en matériau composite à structure en fibres de carbone longues du type de ceux fabriqués par la Société METAL PROCESS.

Le doigt 24 est terminé par une partie terminale, une bille 26 en rubis par exemple, collée après centrage à la partie inférieure du doigt 24 du palpeur 18. La forme sphérique de la bille 26 assure une prise de mesure dans les trois dimensions, quelle que soit la forme de la pièce à contrôler 20.

Le moyen élastique de liaison est constitué d'une membrane souple 28 assujettie au corps 16 par une bague de serrage 30 fixée à l'extrémité inférieure du corps 16, le palpeur 18 étant rendu solidaire de la membrane souple 28.

Une face de la membrane souple présente un relief 28a, une bosse circulaire centrée sur le centre de la membrane 28 et formant une concavité 28b sur l'autre face de la membrane 28.

Par exemple, le relief circulaire a un rayon de 5 mm et la concavité a un rayon de 1 mm.

La membrane souple 28 présente une épaisseur partout égale ; en effet, un pli la fragiliserait et diminuerait la durée de vie du capteur.

La bague de serrage 30 entoure le palpeur 18 de manière à constituer une butée limitant l'amplitude des mouvements radiaux dudit palpeur 18. Cela permet d'éviter le dépassement des limites élastiques de la membrane souple 28 et donc de prévenir toute détérioration accidentelle de celle-ci.

La bague de serrage 30 comprend encore une autre butée 31 qui sert de plan de repos à la membrane souple 28. Sans cette butée 31, au repos, le seul poids du palpeur 18 entraînerait une déformation de la membrane 28. D'autre part, ce plan de repos limite l'amplitude des vibrations parasites qui apparaissent lors des déplacements du capteur.

Enfin, ce plan de repos permet d'éviter tout mouvement de torsion de la membrane lorsque le palpeur est positionné parallèlement à un plan horizontal (au repos, le palpeur est positionné perpendiculairement à un plan horizontal).

La bague de serrage 30 sauvegarde la membrane 28 de mouvements de torsion trop importants. Les mouvements axiaux de grande amplitude et qui déformeraient de façon permanente la membrane 28 sont interdits par une butée 37 placée à l'intérieur du corps 16. L'amplitude autorisée des mouvements axiaux est de 1 mm par exemple.

La membrane est réalisée de façon préférée dans un alliage de fer et de nickel. Elle peut être aussi en inox.

Son épaisseur peut être comprise entre 0,03 mm et 0,09 mm. De façon préférée, son épaisseur est choisie égale à 0,05 mm.

La membrane souple 28 présente un orifice en son centre. Une tige filetée 32 solidaire du palpeur 18 et disposée selon son axe longitudinal passe à travers cet orifice. Une pièce 34 vissée sur la tige filetée 32 pince la membrane 28 de manière à ce que la membrane 28, le palpeur 18 et la pièce 34 ne forment qu'un ensemble solidarisé.

La figure 3 représente schématiquement une vue en coupe d'un mode particulier de réalisation d'un palpeur 18. Le doigt 24 est moulé en matériau composite à structure en fibres de carbone longues. Il a la forme d'un cône creux. Son extrémité inférieure comporte une cavité conique 25 permettant un centrage de la bille 26.

Un matériau composite à structure en fibres de carbone présente une densité environ six fois inférieure à celle de l'acier. Le faible poids du palpeur permet l'utilisation d'un doigt de grande longueur. Un palpeur unique, fixé à demeure à la membrane, permet de mesurer pratiquement toutes les géométries, alors que dans les dispositifs de l'art antérieur, il est nécessaire de changer de palpeur en fonction de la géométrie rencontrée, ce qui nécessite des manipulations longues et délicates. En outre, étant donnée la faible force d'appui nécessaire pour déclencher une commande, un tel palpeur peut être utilisé pour des pièces de duretés différentes.

La forme en creux permet de diminuer notablement le poids du palpeur. De plus, elle permet un bon centrage du doigt 24 par rapport à l'ensemble. En effet, la tige filetée 32 est placée sur un support 33 possédant un tronc conique qui s'emboîte dans le creux conique du doigt 24. Le support 33 est fixé au doigt 24 par un collage.

Sous l'effet d'un contact avec la pièce à contrôler, le palpeur 18 s'écarte de l'axe qu'il occupe au repos. Le contact rompu, le palpeur 18 est ramené dans sa position initiale par les forces de rappel exercées par la membrane souple 28.

Lorsque le palpeur 18 entre en contact avec la pièce à contrôler, le capteur 10 commande l'arrêt des moteurs de la machine de contrôle par l'intermédiaire d'un système de détection des déplacements du palpeur 18. Comme on le voit encore sur la figure 2, ce système comprend un miroir concave 36 solidaire du palpeur 18 et supporté par la pièce 34. Ce miroir 36 est en verre borosilicate dont la face courbe a un rayon de 12 mm et une ouverture de 30°, par exemple.

La bonne isodynamicité de l'ensemble implique que le palpeur 18 soit fixé parfaitement au centre de la membrane 28. De plus, de manière préférée le centre de gravité de l'ensemble formé par le palpeur 18, le support 33 de la tige filetée 32, la pièce 34 et le miroir 36 se trouve dans le plan de la membrane 28.

Une bague 35 pouvant coulisser le long de la pièce 34 et être bloquée à sa position de réglage, permet d'ajuster la position du centre de gravité de l'ensemble maintenu par la membrane 28.

Ce réglage conduit à annuler le moment d'inertie de l'ensemble quelle que soit la position du palpeur.

Dans la variante de réalisation représentée sur la figure 2, le système comporte encore une première fibre optique 38 et une seconde fibre optique 40. Ces deux fibres 38, 40 ont toutes deux une extrémité placée approximativement au centre de courbure du miroir concave 36 lorsque le palpeur 18 est dans sa position de repos. Elles sont maintenues dans un manchon 42 dont la position est réglable grâce à un système de vis de réglage 44.

Les deux fibres 38, 40 sont raccordées par leur autre extrémité à un circuit optoélectronique dont seul le boîtier 22 est représenté sur la figure 2. Ce circuit optoélectronique délivre un premier signal lumineux qui est introduit dans la première fibre optique 38. Ce signal lumineux se réfléchit sur le miroir 36 et est introduit dans la seconde fibre optique 40. L'intensité du signal lumineux délivré par la seconde fibre optique 40 est analysé par le circuit optoélectronique.

Dans le cas où le dispositif est au repos, cette intensité est maximum. Par contre, dès que le palpeur 18 et donc le miroir 36 qui lui est solidaire, s'écartent de leur position de repos, cette intensité décroît. Si elle devient inférieure à une valeur de seuil fixée, le circuit optoélectronique délivre sur une sortie S1 un signal de commande qui permet l'arrêt des moteurs de la machine de contrôle. Grâce au relief 28a imprimé sur la membrane 28, la force appliquée sur le palpeur 18 pour obtenir le franchissement du seuil est sensiblement la même qu'elle soit appliquée de manière axiale ou de manière radiale. Sans ce relief 28a, le capteur est plus sensible aux déplacements radiaux qu'aux déplacements axiaux du palpeur 18, et la force à appliquer dans le sens axial est sensiblement double de la force à appliquer dans le sens radial pour obtenir le franchissement du seuil.

Le circuit optoélectronique est divisé en une partie destinée à l'émission de lumière et une partie destinée à la réception de lumière.

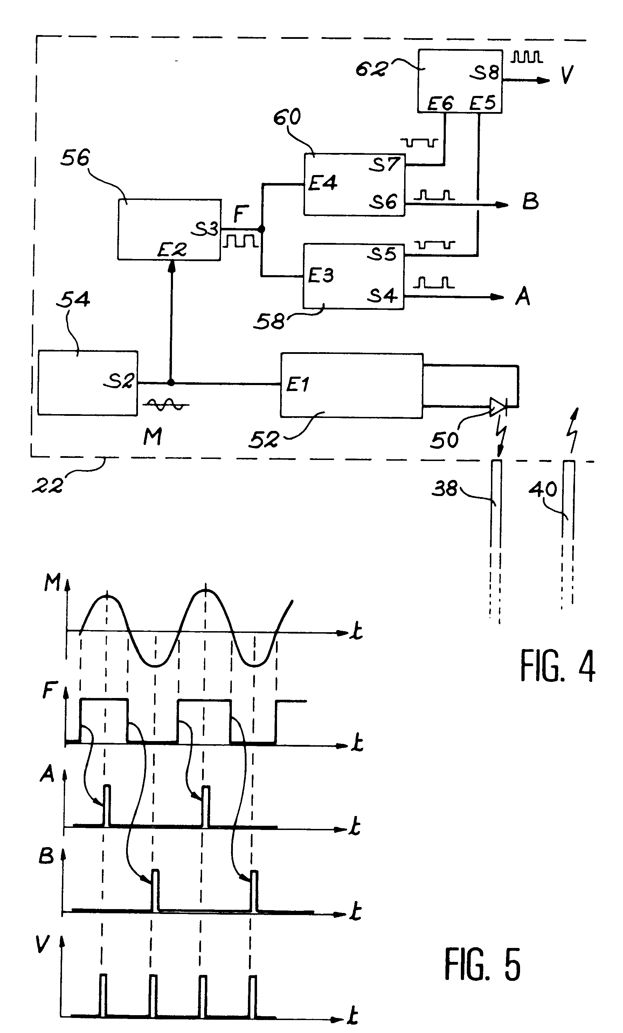

La figure 4 représente schématiquement la partie destinée à l'émission de lumière. Le signal lumineux qui permet la mesure est modulé de manière à pouvoir effectuer une détection synchrone. Ce signal lumineux est produit par une diode électroluminescente 50 connectée à une source d'alimentation 52. Cette dernière est reliée par une entrée E1 à une sortie S2 d'un circuit de modulation 54. Ce circuit 54 délivre sur la sortie S2 un signal sinusoïdal de modulation M. La fréquence de M peut être comprise entre 400 Hz et 1 kHz, par exemple.

Le signal sinusoïdal de modulation M est aussi délivré sur une entrée E2 d'un circuit de mise en forme 56. Ce circuit 56 délivre sur une sortie S3 un signal carré F de même période et en phase avec le signal de modulation M.

Une entrée E3 d'une première bascule 58 est reliée à la sortie S3 du circuit de mise en forme 56. Cette bascule 58 délivre sur une première sortie S4 un signal impulsionnel A déclenché par chaque front montant du signal F et retardé de manière à ce que les impulsions de A soient synchronisées avec les maximums du signal sinusoïdal de modulation M. Une autre sortie S5 de la bascule 58 délivre un signal inverse de A.

Une entrée E4 d'une seconde bascule 60 est reliée à la sortie S3 du circuit de mise en forme 56. Cette bascule 60 délivre sur une première sortie S6 un signal impulsionnel B déclenché par chaque front descendant du signal F et retardé de manière à ce que les impulsions de B soient synchronisées avec les minimums du signal sinusoïdal de modulation M. Une autre sortie S7 de la bascule 60 délivre un signal inverse de B.

Un circuit logique "NON ET" 62 (Nand en terminologie anglosaxonne) est relié par deux entrées E5 et E6 aux sorties S5 et S7 des bascules 58 et 60 respectivement. Ce circuit "NON ET" 62 délivre sur une sortie S8 un signal impulsionnel V dont les impulsions sont alternativement synchronisées sur les impulsions des signaux A et B.

La figure 5 représente schématiquement les diagrammes temporels des différents signaux délivrés par la partie émission du circuit optoélectronique. Le signal M est donc sinusoïdal et est utilisé pour, d'une part moduler l'émission lumineuse de la diode 50 et d'autre part créer les signaux nécessaires à une détection synchrone.

Dans un premier temps, on crée à partir du circuit de mise en forme 56 un signal carré F de même période et en phase avec M.

De ce signal F, et grâce aux deux bascules 58, 60, on tire deux signaux impulsionnels A et B dont les impulsions, par exemple d'une durée de 100 microsecondes environ, sont synchronisées avec les maximums et les minimums (respectivement) de M.

Ces signaux A et B permettent l'élaboration d'un signal V par un circuit logique "NON ET" 62. Les impulsions de V sont synchronisées avec les impulsions de A et de B alternativement, donc avec les maximums et les minimums de M.

Le signal lumineux modulé émis par la diode 50 est injecté dans la première fibre optique 38 (figure 2). Le signal se propage dans cette fibre 38 puis se réfléchit sur le miroir concave 36. Au repos, les fibres 38 et 40 ont une extrémité approximativement au centre de courbure du miroir 36 ; cela entraîne que le signal réfléchi par le miroir 36 est introduit dans la seconde fibre optique 40. Il se propage à l'intérieur de cette dernière et est ensuite détecté et analysé par la partie destinée à la réception de la lumière du circuit optoélectronique.

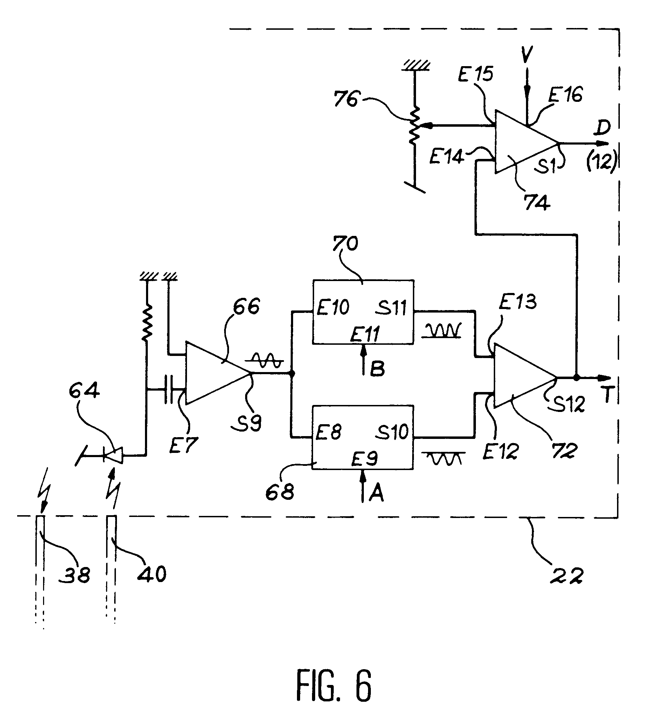

La figure 6 représente schématiquement la partie destinée à la réception de la lumière du circuit optoélectronique.

Le signal lumineux émis par la seconde fibre optique 40 est détecté par une diode photosensible 64. Cette diode 64 est connectée par une de ses bornes à une entrée E7 d'un amplificateur 66 qui délivre sur une sortie S9 un signal électrique dont l'amplitude est proportionnelle à l'intensité du signal lumineux émis par la diode 40 et par conséquent modulée.

Ce signal amplifié est délivré sur les entrées E8, E10 de deux circuits échantillonneur-bloqueurs 68, 70 respectivement.

Le premier échantillonneur-bloqueur 68 est relié par une entrée E9 à la sortie S4 de la première bascule 58. L'échantillonnage est donc délenché par les impulsions du signal A. Puisque la modulation du signal lumineux délivré par la seconde fibre optique 40 est identique à celle du signal lumineux émis par la diode 50, cet échantillonnage se produit sur les maximums du signal détecté (le déphasage introduit par la durée du trajet effectué par la lumière de la diode émettrice 50 à la diode réceptrice 64 est négligeable).

Le second échantillonneur-bloqueur 70 est relié par une entrée E10 à la sortie S6 de la seconde bascule 60. L'échantillonnage est donc déclenché par les impulsions du signal B. Cet échantillonnage se produit sur les minimums du signal détecté.

Les deux échantillonneur-bloqueurs 68, 70 délivrent sur leurs sorties S10 et S11 respectives des signaux d'échantillonnage, l'un délivré par le circuit 68 correspondant à la valeur maximum de l'amplitude du signal amplifié, l'autre délivré par le circuit 70 correspondant à la valeur minimum de l'amplitude du signal amplifié. Ces deux signaux sont introduits respectivement sur deux entrées E12 et E13 d'un amplificateur différentiel 72. Cet amplificateur différentiel 72 délivre sur une sortie S12 un signal T proportionnel à la différence entre les signaux d'échantillonnage délivrés par les échantillonneur-bloqueurs 68, 70. Ce signal T délivré sur la sortie S12 est donc proportionnel à l'amplitude crêté à crêté du signal amplifié par l'amplificateur 66.

La sortie S12 de l'amplificateur différentiel 72 est connectée à une entrée E14 d'un circuit comparateur 74. Le signal T est comparé avec une valeur de seuil VS fixée mais réglable grâce à un potentiomètre 76 relié à une entrée E15 du circuit comparateur 74. La comparaison est déclenchée par le signal V délivré par le circuit logique "NON ET". En effet, la sortie S8 de celui-ci est connectée à une entrée E16 du circuit comparateur 74, ce qui permet de réaliser une détection synchrone avec la modulation.

Le circuit comparateur 74 délivre sur une sortie S1 un signal de commande D lorsque le signal T est supérieur à la valeur de seuil VS. Ce signal D permet l'arrêt des moteurs de la machine de contrôle lorsqu'un contact est détecté entre la pièce à contrôler et le palpeur du capteur.

En effet, lorsque le palpeur 18 est dans sa position de repos, l'intensité lumineuse détectée par la diode photosensible 64 est maximum, puisque le signal lumineux est focalisé par le miroir concave 36 sur l'extrémité de la fibre optique 40 placée approximativement au centre de courbure du miroir 36. Par contre, si le palpeur s'écarte de sa position de repos, le signal lumineux réfléchi par le miroir 36 n'est plus focalisé sur l'extrémité de la fibre optique 40. Dans ce cas, le flux lumineux détecté par la diode 64 est inversement proportionnelle à l'amplitude du déplacement du palpeur 18.

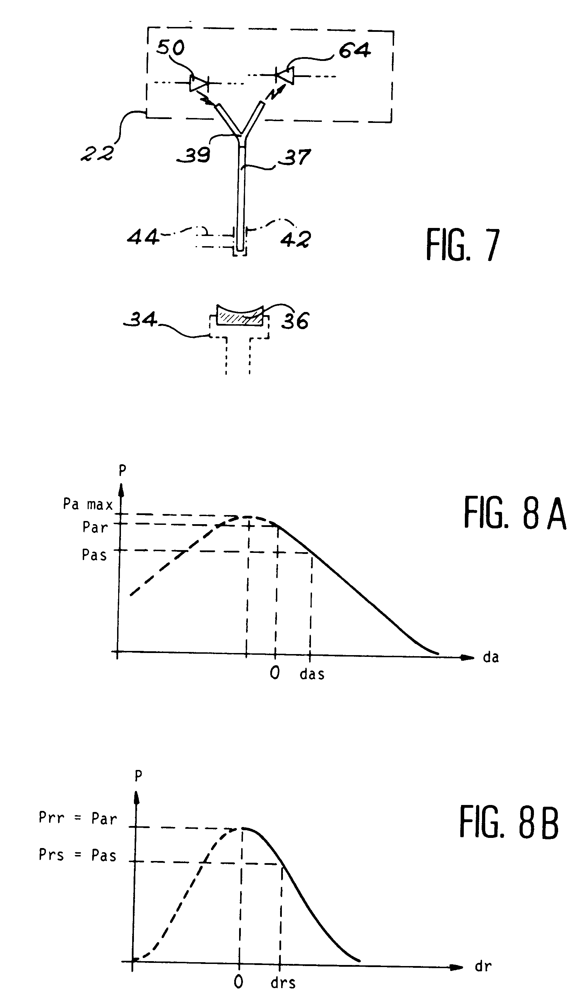

La figure 7 représente schématiquement une variante de réalisation d'un système de détection des déplacements du palpeur.

Ce système comporte un miroir concave 36 solidaire du palpeur (non représenté sur la figure 7) et supporté par une pièce 34.

Dans cette variante de réalisation, le système ne comporte qu'une seule fibre optique 37 connectée à une de ses extrémités par une sortie d'un séparateur de faisceau 39. L'autre de ses extrémités est placée approximativement au centre de courbure du miroir concave 36 lorsque le palpeur est dans sa position de repos. La position de cette dernière extrémité de la fibre 37 est réglable par l'intermédiaire d'un manchon 42 relié à un système de vis de réglage 44.

Une entrée et une sortie du séparateur de faisceau 39 sont raccordées au boîtier 22 du circuit optoélectronique de manière à ce que l'entrée soit connectée à la diode électroluminescente d'émission 50 et la sortie soit connectée à la diode photosensible de réception 64.

De cette manière, le signal lumineux émis par la diode 50 est introduit dans la fibre optique 37 par l'intermédiaire du séparateur de faisceau 39. Après s'être propagé dans la fibre 37, le signal lumineux est réfléchi par le miroir concave 36, puis refocalisé dans la fibre 37. Le signal lumineux réfléchi est alors délivré par le séparateur de faisceau sur la diode photosensible 64.

Le circuit optoélectronique est identique à celui précédemment décrit.

Les figures 8A et 8B représentent schématiquement l'allure des variations de la puissance lumineuse recueillie par une fibre optique (soit la fibre unique 37 du dispositif représenté sur la figure 7, soit la fibre 40 du dispositif représenté sur la figure 2) après réflexion sur le miroir concave 36 en fonction de l'amplitude d'un déplacement axial da et radial dr (respectivement) du palpeur 18.

L'extrémité de la fibre de réception (37 ou 40) de la lumière étant très légèrement décalée par rapport au point de focalisation du miroir concave 36, les courbes prennent une allure sensiblement triangulaire avec un sommet arrondi. Préférentiellement, l'extrémité de la fibre de réception (37 ou 40) est abaissée par rapport au point de focale du miroir concave 36 au repos.

Sur la figure 8A, la partie en traits tiretés de la courbe correspond à un déplacement axial du palpeur 18 vers le bas qui est interdit par la butée 31 (figure 2).

La puissance recueillie maximum est notée Pamax ; elle n'est jamais atteinte en fonctionnement normal, puisque Pamax est obtenue lorsque le point de focalisation du miroir concave 36 coïncide avec l'extrémité de la fibre de réception.

Au repos, da égale 0 et on note Par la puissance recueillie. Cette position de repos est choisie (lors du réglage de l'extrémité de la fibre de réception) telle qu'elle se situe sur la pente quasi linéaire décroissante de la courbe. Lorsqu'un mouvement axial déplace le palpeur, la puissance lumineuse recueillie décroît. Le franchissement de seuil qui permet l'arrêt des moteurs de la machine à mesurer est choisi pour un déplacement da égal à une valeur das. Cette valeur das correspond à une puissance lumineuse recueillie par la fibre notée Pas.

La figure 8B représente schématiquement la puissance lumineuse P recueillie par la fibre de réception en fonction de l'amplitude des déplacements radiaux dr du palpeur 18. La partie en traits tiretés correspond à un déplacement de même direction, mais de sens opposé au déplacement permettant le tracé en trait plein. Au repos, dr égale 0 et la puissance mesurée correspond à une valeur maximum Prr qui est égale à la puissance Par de repos de la courbe représentée sur la figure 7A.

Le franchissement de seuil est obtenu pour un déplacement drs qui correspond à une puissance lumineuse Prs égale à Pas.

Les déplacements axiaux das et radiaux drs sont obtenus, grâce à la présence du relief 28a sur la membrane 28, avec des forces appliquées sur le palpeur 18 sensiblement égales et comprises par exemple, entre $10^{-2}$ N et $0,5 \cdot 10^{-2}$ N pour une membrane 28 de 0,05 mm d'épaisseur.

La valeur de la puissance lumineuse recueillie dépend de la puissance lumineuse émise par la diode 50 (figure 4).

Les valeurs des amplitudes das et drs des déplacements da et dr sont fonction du diamètre du coeur de la fibre de réception, du rapport entre la distance de l'extrémité de la fibre de réception au miroir 36 et la distance du miroir 36 à l'extrémité du palpeur 18 (au niveau de la bille 26), et de la longueur du doigt 24.

Le montage électronique utilisé dans le circuit optoélectronique n'introduit quasiment aucune erreur sur la mesure. En effet, cette erreur a été estimée, lors d'essais effectués, entre 0,2 micromètre et 0,4 micromètre.

Le capteur de contact selon l'invention permet donc bien de réduire la pression de contact du palpeur sur la pièce, ce qui évite toute déformation de cette dernière. Le capteur est très sensible, ce qui permet de limiter le déplacement du palpeur 18 à une amplitude négligeable. La fiabilité du système est ainsi assurée.

Le circuit optoélectronique enfermé dans son boîtier 22 est insensible aux parasites électriques ou lumineux. De plus, ce circuit est stable dans le temps et présente un faible bruit.

La transmission du signal lumineux par fibres optiques permet, si on le désire, d'éloigner le circuit optoélectronique du corps principal mécanique du capteur.

Le fait que l'on dispose en permanence du signal T proportionnel à l'amplitude crête à crête du signal amplifié et que la réponse du système soit quasi linéaire dans ses domaines d'utilisation permet, grâce à un traitement adapté du signal T, de reconstituer en continu la géométrie de la pièce à contrôler. Pour cette utilisation, la sortie S1 doit être déconnectée de la machine de contrôle.

Il va de soi que l'invention ne se limite nullement à l'exemple de réalisation plus spécialement décrit et représenté ; elle admet au contraire toutes les variantes. En particulier, on pourrait utiliser un système de fixation du palpeur à la membrane souple et à la pièce, support du miroir concave, réalisé à partir d'aimants, à condition de bien disposer l'axe longitudinal du palpeur sur le centre de la membrane souple.

## Revendications

1. Capteur de contact multidirectionnel comprenant un palpeur mobile (18) maintenu par un moyen élastique à une extrémité d'un corps (16) apte à être monté sur une machine de contrôle et un système de détection des déplacements du palpeur (18) par rapport au corps (16), caractérisé en ce que le moyen élastique est constitué d'une membrane souple (28) assujettie au corps (16), une face de la membrane souple (28) présentant un relief (28a) circulaire centré sur le centre de la membrane (28) et formant une concavité (28b) sur l'autre face de la membrane (28), le palpeur (18) étant rendu solidaire de la membrane souple (28) par des moyens de fixation et en ce qu'une butée (31) sert de plan de repos à la membrane souple (28).

2. Capteur de contact multidirectionnel selon la revendication 1, caractérisé en ce que la membrane souple (28) est assujettie au corps (16) au moyen d'une bague de serrage (30) supportant ladite butée (31).

3. Capteur de contact multidirectionnel selon la revendication 1, caractérisé en ce que la membrane souple (28) présente une épaisseur comprise entre 0,03 mm et 0,09 mm.

4. Capteur de contact multidirectionnel selon la revendication 1, caractérisé en ce que la membrane souple (28) est réalisée dans un alliage de fer et de nickel.

5. Capteur de contact multidirectionnel selon la revendication 4, caractérisé en ce que la membrane souple (28) présente une épaisseur égale à 0,05 mm.

6. Capteur de contact multidirectionnel selon la revendication 1, caractérisé en ce que, la membrane souple (28) présentant un orifice en son centre, les moyens de fixation du palpeur à la membrane souple (28) consistent en une tige filetée (32) solidarisée au palpeur (18) par un support (33) et disposée selon l'axe longitudinal dudit palpeur, la tige filetée (32) passant à travers l'orifice et en une pièce (34) vissée sur la tige filetée (32) de manière à ce que la membrane souple (28) soit pincée entre la pièce (34) et le support (33), ladite pièce (34) constituant un support pour un miroir concave (36).

7. Capteur de contact multidirectionnel selon la revendication 1, caractérisé en ce que le système de détection des déplacements du palpeur (18) comprend :
   - un miroir concave (36) solidaire du palpeur (18),
   - une première fibre optique (38) et une deuxième fibre optique (40), ayant toutes deux une extrémité placée approximativement au centre de courbure du miroir concave (36) lorsque le palpeur (18) est dans sa position de repos,
   - un circuit optoélectronique relié à une extrémité de chaque fibre optique (38, 40),

   ce circuit délivrant un premier signal lumineux introduit dans la première fibre optique (38), captant un second signal lumineux délivré par la seconde fibre optique (40), analysant ce second signal lumineux et délivrant au moins un signal électrique de commande lorsque des variations d'intensité du second signal lumineux sont détectées.

8. Capteur de contact multidirectionnel selon la revendication 1, caractérisé en ce que le système de détection des mouvements du palpeur comprend un circuit optoélectronique comportant :
   - un circuit de modulation (54) délivrant sur une sortie (S2) un signal sinusoïdal de modulation (M),
   - une source d'alimentation (52) reliée par une entrée (E1) à la sortie (S2) du circuit de modulation (52),

- une diode électroluminescente (50) connectée à la source d'alimentation (52),
- un circuit de mise en forme (56) relié par une entrée (E2) à la sortie (S2) du circuit de modulation (54) et délivrant sur une sortie (S3) un signal carré (F) de même période et en phase avec le signal de modulation (M),
- une première bascule (58) reliée par une entrée (E3) à la sortie (S3) du circuit de mise en forme (56) et délivrant sur une première sortie (S4) un signal impulsionnel (A) synchronisé sur chaque maximum du signal de modulation (M), et sur une seconde sortie (S5) un signal inverse du signal délivré sur la première sortie (S4),
- une seconde bascule (60) reliée par une entrée (E4) à la sortie (S3) du circuit de mise en forme (56) et délivrant sur une première sortie (S6) un signal impulsionnel (B) synchronisé sur chaque minimum du signal de modulation (M), et sur une seconde sortie (S7) un signal inverse du signal délivré sur la première sortie (S6),
- un circuit logique "NON ET" (62) relié par une première entrée (E5) à la seconde sortie (S5) de la première bascule (58), par une seconde entrée (E6) à la seconde sortie (S7) de la seconde bascule (60) et délivrant sur une sortie (S8) un signal impulsionnel de validation (V),
- une diode photosensible (64) émettant un signal électrique sur une de ses bornes,
- un amplificateur (66) connecté à la diode photosensible (64) et délivrant sur une sortie (S9) un signal électrique amplifié,
- un premier circuit échantillonneur-bloqueur (68) relié par une entrée (E8) à la sortie (S9) de l'amplificateur (66) et relié par une autre entrée (E9) à la sortie (S4) de la première bascule (58), l'échantillonnage étant déclenché par le signal impulsionnel (A) délivré par la première bascule (58) et délivrant sur une sortie (S10) un signal d'échantillonnage,
- un second circuit échantillonneur-bloqueur (70) relié par une entrée (E10) à la sortie (S9) de l'amplificateur (66) et relié par une autre entrée (E11) à la sortie (S6) de la seconde bascule (60), l'échantillonnage étant déclenché par le signal impulsionnel (B) délivré par la seconde bascule (60), et délivrant sur une sortie (S11) un signal d'échantillonnage,
- un amplificateur différentiel (72) relié par une première entrée (E12) à la sortie (S10) du premier échantillonneur-bloqueur (68), relié par une seconde entrée (E13) à la sortie (S11) du second échantillonneur-bloqueur (70) et délivrant sur une sortie (S12) un signal (T) proportionnel à la différence entre les signaux d'échantillonnage délivrés par les échantillonneur-bloqueurs (68, 70),
- un circuit comparateur (74) relié par une entrée (E14) à la sortie (S12) de l'amplificateur différentiel (72) et par une autre entrée (E16) à la sortie (S8) du circuit logique "NON ET" (62), et délivrant un signal de commande (D) lorsque le signal (T) proportionnel à la différence entre les signaux d'échantillonnage est supérieur à une valeur de seuil (VS) déterminée.

9. Capteur de contact multidirectionnel selon la revendication 1, le palpeur (18) comprenant un doigt (24) et une partie terminale (26), caractérisé en ce que le doigt (24) est en matériau composite à structure en fibres de carbone longues moulé en forme de cône creux.

10. Capteur de contact multidirectionnel selon la revendication 1, caractérisé en ce que la membrane souple (28) supporte un ensemble de pièces (18, 33, 34, 36) présentant son centre de gravité au centre de la membrane (28).

11. Capteur de contact multidirectionnel selon la revendication 10, caractérisé en ce qu'il comporte un moyen (35) pour ajuster la position dudit centre de gravité.

**Patentansprüche**

1. Mehrrichtungs-Kontaktsensor, umfassend: einen beweglichen Fühler (18), der mittels eines elastischen Elements an einem Ende eines Körpers (16), der für die Montage auf eine Steuermaschine und ein Detektionssystem für Verschiebungen des Fühlers (18) relativ zum Körper (16) geeignet ist, befestigt ist, dadurch gekennzeichnet, daß des elastische Element aus einer dehnbaren, am Körper (16) befestigten Membran (28) besteht, wobei eine Seite der dehnbaren Membran (28) ein kreisförmiges, auf die Mitte der Membran (28) zentriertes Relief (28a) aufweist und auf der anderen Seite Membran (28) eine Hohlrundung bildet, wobei der Fühler (18) durch Befestigungseinrichtung fest mit der dehnbaren Membran (28) verbunden ist und wobei ein Anschlag (31) als Ruhefläche für die dehnbare Membran (28) dient.

2. Mehrrichtungs-Kontaktsensor gemäß Anspruch 1, dadurch gekennzeichnet, daß die dehnbare Membran (28) mittels eines Klemmrings (30), der den gennanten Anschlag (31) stützt, am Körper (16) befestigt ist.

3. Mehrrichtungs-Kontaktsensor gemäß Anspruch 1, dadurch gekennzeichnet, daß die dehnbare Membran (28) eine Gesamtdicke zwischen 0.03 mm und 0,09 mm aufweist.

4. Mehrrichtungs-Kontaktsensor gemäß Anspruch 1, dadurch gekennzeichnet, daß die dehnbare Membran (28) in einer Eisen-Kupfer-Legierung hergestellt wird.

5. Mehrrichtungs-Kontaktsensor gemäß Anspruch 1, dadurch gekennzeichnet, daß die dehnbare Membran (28) eine Dicke von 0,05 mm aufweist.

6. Mehrrichtungs-Kontaktsensor gemäß Anspruch 1, dadurch gekennzeichnet, daß die dehnbare Membran (28) in ihrer Mitte eine Öffnung aufweist, wobei die Befestigungseinrichtungen des Fühlers an der dehbaren Membran (28) besteht aus einem Gewindebolzen (32), der mit dem Fühler (18) durch einen Träger (33) verbunden und der entlang der Längsachse des gennanten Fühlers angeordnet ist, wobei der Gewindebolzen (32) durch die Öffnung hindurchgeht, und aus einem mit dem Gewindebolzen (32) derart verschraubten Bauteil (34), daß die dehnbare Membran (28) zwischen das Bauteil (34) und den Träger (33) geklemmt wird, wobei das gennante Bauteil (34) einen Träger für einen Konkavspiegel (36) bildet.

7. Mehrrichtungs-Kontaktsensor gemäß Anspruch 1, dadurch gekennzeichnet, daß das Detectionssystem für Verschiebungen des Fühlers (18) umfaßt:
    - einen mit dem Fühler (18) verbundenen Konkavspiegel (36),
    - eine erste optische (38) und eine zweite optische Faser (40), die alle beide ein etwa im Mittelpunkt der Krümmung des Konkavspiegels (36) liegendes Ende haben, wenn der Fühler (18) in seiner Ruhelage ist,
    - einen mit einem Ende jeder optischen Faser (30,40) verbundenen optoelektronischen Schaltkreis, wobei dieser Schaltkreis ein erstes Lichtsignal liefert, das in die erste optische Faser eingespeist wird, die ein zweites von der zweiten optischen Faser (40) geliefertes Lichtsignal auffängt, dieses zweite Lichtsignal analysiert und mindestens ein elektrisches Steuersignal liefert, wenn Intensitätsänderungen des zweiten Lichtsignals detektiert werden.

8. Mehrrichtungs-Kontaktsensor gemäß Anspruch 1, dadurch gekennzeichnet, daß das Detektionssystem für Verschiebungen des Fühlers (18) einen optoelektronischen Schaltkreis umfaßt, der einschließt:

- eine Modulationsschaltung (54), die an einem Ausgang (S2) ein sinusförmig Modulationssignal (M) liefert,
- eine Versorgungsquelle (52), die durch einen Eingang (E1) mit dem Ausgang (S2) der Modulationsschaltung (52) verbunden ist,
- eine Lumineszenzdiode (50), die mit der Versorgungsquelle (52) verbunden ist,
- eine Impulsformerschaltung (56), die durch einen Eingang (E3) mit dem Ausgang (S2) der Modulationsschaltung (54) verbunden ist und an einem Ausgang (S3) ein Rechtecksignal (F) mit gleicher Periode und in Phase mit dem Modulationssignal (M) liefert,
- eine erste Kippschaltung (58), die durch einen Eingang (E3) mit dem Ausgang (S3) der Impulsformerschaltung (56) verbunden ist und die an einem ersten Ausgang (S4) ein mit jedem Maximum des Modulationssignals (M) synchronisiertes Stoßsignal (A) und an einem zweiten Ausgang (S5) ein zum am ersten Ausgang (S4) gelieferten Signal invertiertes Signal liefert,
- eine zweite Kippschaltung (60), die durch einen Eingang (E4) mit dem Ausgang (S3) der Impulsformerschaltung (56) verbunden ist und die an einem ersten Ausgang (S6) ein mit jedem Minimum des Modulationssignals (M) synchronisiertes Stoßsignal (B) und an einem zweiten Ausgang (S7) ein zum am ersten Ausgang (S6) gelieferten Signal invertiertes Signal liefert,
- eine "NICHT UND"-Logikschaltung, die durch einen ersten Eingang (E5) mit dem zweiten Ausgang (S5) der ersten Kippschaltung (58) und durch einen zweiten Eingang (E6) mit dem zweiten Ausgang (S7) der zweiten Kippschaltung (60) verbunden ist und die an einem Ausgang (S8) ein Gültigkeits-Stoßsignal (V) liefert,
- eine lichtempfindliche Diode (64), die an einem ihrer Anschlüsse ein elektrisches Signal aussendet,
- einen Verstärker (66), der mit der lichtempfindlichen Diode (64) verbundenen ist und an einem Ausgang (S9) ein verstärktes elektrisches Signal liefert,
- eine erste Abtast-Sperrschaltung (68), die durch einen Eingang (E8) mit dem Ausgang (S9) des Verstärkers (66) und durch einen anderen Eingang (E9) mit dem Ausgang (S4) der ersten Kippschaltung (58) verbunden ist, wobei die Abtastung durch das von der ersten Kippschaltung (58) gelieferte Stoßsignal (A) ausgelöst wird an einem Ausgang (S10) ein Abtastsignal liefert,
- eine zweite Abtast-Sperrschaltung (70), die durch einen Eingang (E10) mit dem Ausgang (S9) des Verstärkers (66) und durch einen anderen Eingang (E11) mit dem Ausgang (S6) der zweiten Kippschaltung (60) verbunden ist, wobei die Abtastung durch das von der zweiten Kippschaltung (60) gelieferte Stoßsignal (B) ausgelöst wird an einem Ausgang (S11) ein Abtastsignal liefert,
- einen Differenzverstärker (72), der durch einen ersten Eingang (E12) mit dem Ausgang (S10) der ersten Abtast-Sperrschaltung (68) und durch einen zweiten Eingang (E13) mit dem Ausgang (S11) der zweiten Abtast-Sperrschaltung (70) verbunden ist und an einem Ausgang (S12) ein zur Differenz zwischen den von den Abtast-Sperrschaltungen (68, 70) gelieferten Abtastsignalen proportionales Signal (T) liefert,
- eine Vergleichsschaltung (74), die durch einen Eingang (E14) mit dem Ausgang (S12) des Differenzverstärkers (72) und durch anderen Eingang (E16) mit dem Ausgang (S8) der "NICHT UND"-Logikschaltung (62) verbunden ist und die ein Steuersignal (D) liefert, wenn das zur Differenz zwischen den Abtastsignalen proportionale Signal (T) größer als ein festgelegter Schwellenwert (VS) ist.

9. Mehrrichtungs-Kontaktsensor gemäß Anspruch 1, wobei der Fühler (18) einen Finger (24) und ein Endteil (26) umfaßt, die dadurch gekennzeichnet sind, daß der Finger (24) aus einem Verbundmaterial mit einer Struktur aus langen, hohlkegelförmig geformten Kohlenstoffasern ist.

10. Mehrrichtungs-Kontaktsensor gemäß Anspruch 1, dadurch gekennzeichnet, daß die dehnbare Membran (28) eine Einheit von Teilen (18, 33, 34, 36), deren Schwerpunkt in der Mitte der Membran (28) liegt, stützt.

11. Mehrrichtungs-Kontaktsensor gemäß Anspruch 10, dadurch gekennzeichnet, daß er eine Einrichtungs (35) zur Justierung des gennanten Schwerpunkts umfaßt.

**Claims**

1. Multidirectional contact sensor comprising a movable probe (18) held by an elastic means to one end of a body (16) capable of being mounted on a checking machine and a system for detecting the displacements of the probe (18) with respect to the body (16), characterised in that the elastic means consists of a flexible membrane (28) fastened to the body (16), one face of the flexible membrane (28) having a circular relief (28a) centred on the centre of the membrane (28) and forming a concavity (28b) on the other face of the membrane (28), the probe (18) being made rigid with the flexible membrane (28) by fixing means and in that a stop (31) serves as rest plane for the flexible membrane (28).

2. Multidirectional contact sensor according to Claim 1, characterised in that the flexible membrane (28) is fastened to the body (16) by means of a clamping ring (30) supporting the said stop (31).

3. Multidirectional contact sensor according to Claim 1, characterised in that the flexible membrane (28) has a thickness of between 0.03 mm and 0.09 mm.

4. Multidirectional contact sensor according to Claim 1, characterised in that the flexible membrane (28) is made from an iron and nickel alloy.

5. Multidirectional contact sensor according to Claim 4, characterised in that the flexible membrane (28) has a thickness equal to 0.05 mm.

6. Multidirectional contact sensor according to Claim 1, characterised in that, with the flexible membrane (28) having an orifice at its centre, the means of fixing the probe to the flexible membrane (28) consist of a threaded rod (32) made rigid with the probe (18) by a support (33) and arranged along the longitudinal axis of the said probe, the threaded rod (32) passing through the orifice and of a part (34) screwed onto the threaded rod (32) in such a way that the flexible membrane (28) is pinched between the part (34) and the support (33), the said part (34) constituting a support for a concave mirror (36).

7. Multidirectional contact sensor according to Claim 1, characterised in that the system for detecting the displacements of the probe (18) comprises:
    - a concave mirror (36) rigid with the probe (18),
    - a first optical fibre (38) and a second optical fibre (40), both having an end placed approximately at the centre of curvature of the concave mirror (36) when the probe (18) is in its rest position,
    - an optoelectronic circuit connected to one end of each optical fibre (38, 40),
this circuit delivering a first light signal introduced into the first optical fibre (38), capturing a second light signal delivered by the second optical fibre (40), analysing this second light signal and delivering at least one electrical control signal when variations in intensity of the second light signal are detected.

8. Multidirectional contact sensor according to Claim 1, characterised in that the system for detecting the movements of the probe comprises an optoelectronic circuit including:

- a modulating circuit (54) delivering a sinusoidal modulating signal (M) on an output (S2),
- a source of supply (52) connected via an input (E1) to the output (S2) of the modulating circuit (52),
- an electroluminescent diode (50) connected to the source of supply (52),
- a shaping circuit (56) connected via an input (E2) to the output (S2) of the modulating circuit (54) and delivering on an output (S3) a square signal (F) of like period and in phase with the modulating signal (M),
- a first flip-flop (58) connected via an input (E3) to the output (S3) of the shaping circuit (56) and delivering on a first output (S4) a pulsed signal (A) synchronised with each maximum of the modulating signal (M), and on a second output (S5) a signal inverse to the signal delivered on the first output (S4),
- a second flip-flop (60) connected via an input (E4) to the output (S3) of the shaping circuit (56) and delivering on a first output (S6) a pulsed signal (B) synchronised with each minimum of the modulating signal (M), and on a second output (S7) a signal inverse to the signal delivered on the first output (S6),
- a "NAND" logic circuit (62) connected via a first input (E5) to the second output (S5) of the first flip-flop (58), via a second input (E6) to the second output (S7) of the second flip-flop (60) and delivering on an output (S8) a pulsed enabling signal (V),
- a photosensitive diode (64) emitting an electrical signal on one of its terminals,
- an amplifier (66) connected to the photosensitive diode (64) and delivering on an output (S9) an amplified electrical signal,
- a first sample-and-hold circuit (68) connected via an input (E8) to the output (S9) of the amplifier (66) and connected via another input (E9) to the output (S4) of the first flip-flop (58), the sampling being triggered by the pulsed signal (A) delivered by the first flip-flop (58) and delivering on an output (S10) a sampling signal,
- a second sample-and-hold circuit (70) connected via an input (E10) to the output (S9) of the amplifier (66) and connected via another input (E11) to the output (S6) of the second flip-flop (60), the sampling being triggered by the pulsed signal (B) delivered by the second flip-flop (60), and delivering on an output (S11) a sampling signal,
- a differential amplifier (72) connected via a first input (E12) to the output (S10) of the first sample-and-hold circuit (68), connected via a second input (E13) to the output (S11) of the second sample-and-hold circuit (70) and delivering on an output (S12) a signal (T) proportional to the difference between the sampling signals delivered by the sample-and-hold circuits (68, 70),
- a comparator circuit (74) connected via an input (E14) to the output (S12) of the differential amplifier (72) and via another input (E16) to the output (S8) of the "NAND" logic circuit (62), and delivering a control signal (D) when the signal (T) proportional to the difference between the sampling signals is greater than a specified threshold value (VS).

9. Multidirectional contact sensor according to Claim 1, the probe (18) comprising a finger (24) and an end portion (26), characterised in that the finger (24) is made of a composite material with a structure based on long carbon fibres, which is moulded into the form of a hollow cone.

10. Multidirectional contact sensor according to Claim 1, characterised in that the flexible membrane (28) supports a set of parts (18, 33, 34, 36) having its centre of gravity at the centre of the membrane (28).

11. Multidirectional contact sensor according to Claim 10, characterised in that it includes a means (35) for altering the position of the said centre of gravity.

FIG.1

FIG. 2

FIG. 3

FIG. 4

FIG. 5

FIG. 6

FIG. 7

FIG. 8 A

FIG. 8 B